(19) Europäisches Patentamt
European Patent Office
Office européen des brevets

(11) EP 0 494 533 B1

(12) EUROPEAN PATENT SPECIFICATION

(45) Date of publication and mention
of the grant of the patent:
28.02.1996  Bulletin 1996/09

(51) Int Cl.6: C08L 59/02, C08K 3/00
// (C08L59/00, 25:04, 101:00)

(21) Application number: 91311961.6

(22) Date of filing: 23.12.1991

(54) **Polyacetal resin composition structure and process for producing the same**

Strukturierte Polyacetalharzzusammensetzung sowie Verfahren zu ihrer Herstellung

Composition de résine polyacétale et procédé de préparation

(84) Designated Contracting States:
AT BE CH DE DK ES FR GB GR IT LI LU MC NL SE

(30) Priority: 28.12.1990 JP 416578/90

(43) Date of publication of application:
15.07.1992  Bulletin 1992/29

(73) Proprietor: POLYPLASTICS CO. LTD.
Chuo-Ku, Osaka-shi, Osaka 541 (JP)

(72) Inventors:
• Tajima, Yoshihisa
Shimizu-shi, Shizuoka (JP)
• Miyawaki, Keiichi
Fuji-shi, Shizuoka (JP)
• Sano, Hiroyuki
Fuji-shi, Shizuoka (JP)

(74) Representative: Jackson, Peter et al
London SW15 5JE (GB)

(56) References cited:
FR-A- 2 022 481

• POLYMER JOURNAL. vol. 9, no. 1, 1977, TOKYO JP pages 47 - 59; L.S.CORLEY ET AL. : 'HALOALDEHYDE POLYMERS. V. POLYMER BLENDS INVOLVING CHLORAL POLYMERS'

## Description

The present invention relates to a structure of a composition comprising a polyacetal resin as a matrix and a thermoplastic polystyrene resin dispersed therein to give a network structure. The invention further relates to a process for producing the said composition. It provides a molded resin article which can be formed by a simple process at a low cost, retains the properties of the polyacetal and is particularly remedied in molding shrinkage and improved in other properties, especially in its surface properties.

Polyacetal resin is used in a very wide range of fields as a representative engineering plastic by virtue of its excellent moldability, well-balanced mechanical, electrical, heat-resistant, chemical-resistant and abrasion-resistant properties and, for a plastic material, its excellent fatigue resistance. As its fields of application have increased, however, demands have arisen for a reduction in its cost and for specialised requirements in its performance. One such requirement is a remedy for its shrinkage in molding. This is because polyacetal resin has a high molding shrinkage due to its high degree of crystallization, which often causes problems in such applications as forming precision parts, thin-walled parts and large parts, thus making it necessary to utilise an elaborate mold design to compensate for the molding shrinkage.

The incorporation of another non-crystalline resin has been generally attempted as a means for coping with the above-described requirements for the polyacetal resin. One example thereof comprises incorporating a polystyrene resin. This method has attractions in that the polystyrene resin is inexpensive. The polymer blend of a polyacetal resin with a thermoplastic polystyrene resin, however, has a drawback of a significant deterioration of the features inherent in the polyacetal resin.

Japanese Patent Laid-Open No. 38463/1989 discloses that the use of a particular polystyrene resin having a high viscosity was effective in remedying the above-described problem. This method is, however, still unsatisfactory and further brings about an increase in the viscosity of the composition which often poses problems in the preparation and molding of the composition.

An object of the present invention is to remedy the above-described drawbacks through an improvement in the form of dispersion of both components in the case of a polyacetal resin with a polystyrene resin and to provide a molded resin article which has a low molding shrinkage, is inexpensive and is excellent in its practical application.

In view of the above-described object, the present inventors have made intensive studies on the form of dispersion in the case of a polymer blend of a polyacetal resin with a thermoplastic polystyrene resin, and, as a result, have found that a structure comprising a polystyrene resin dispersed in a polyacetal resin to give a network structure is formed through the combined use of a particular filler and the regulation of a relative surface tension between individual components during melt kneading. They further found that the network structure thus obtained has a low molding shrinkage and is also excellent in other properties. These findings have led to the completion of the present invention.

Thus the present invention relates to a process for forming a polyacetal resin composition structure wherein a polyacetal resin (A) and a polystyrene resin (B) form an interpenetrating network dispersion, characterised in that a particulate filler (C) having a larger surface tension at the melt-kneading temperature than that of at least component B and having a mean particle diameter of 0.05 to 50 $\mu$m is incorporated in an amount satisfying the relationship represented by the following formulae (1) and (2) when melt-kneading the component B with the component A as a matrix:

$$B/(A + B) = 0.05 \text{ to } 0.5 \text{ (by weight)} \tag{1}$$
$$C/(B + C) = 0.1 \text{ to } 0.7 \text{ (by weight)} \tag{2}.$$

FR-A-2022481 (Farbwerke Hoechst AG) discloses a composition in which a styrene polymer component forms a dispersed phase in a polyacetal resin, but in that case, the styrene forms discrete particles and not a continuous phase.

The form of dispersion of the interpenetrating network structure according to the present invention is described below with reference to the accompanying drawings, in which:

Figure 1 is a schematic view of a structure of a conventional polymer blend system.

Figure 2 is a schematic view of the structure according to the present invention.

Figure 3 is an electron photomicrograph of a particulate structure (a network structure) after the acid-decomposition of the structure (Example 1) according to the present invention.

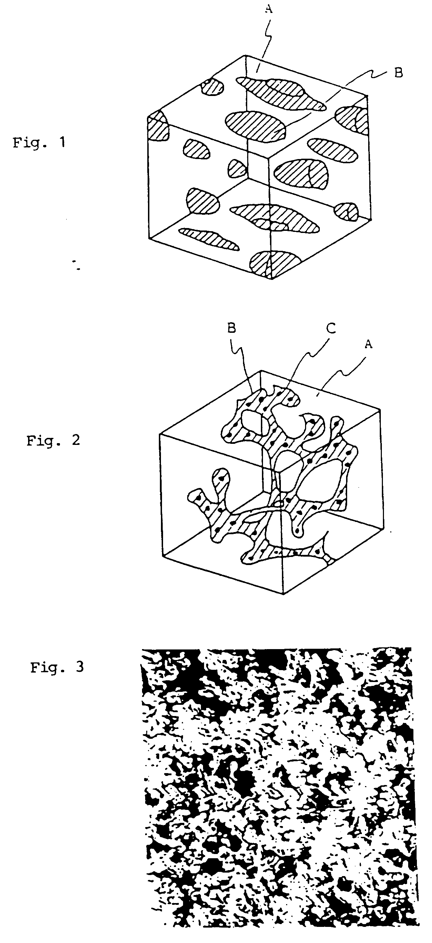

Figure 1 shows the form of dispersion in the conventional polymer blend system wherein a thermoplastic polystyrene resin (B) is dispersed, in the particulate or delaminated form, in a polyacetal matrix resin (A) in a relatively lower amount than that of the matrix resin (A). On the other hand, Figure 2 is a schematic view of the interpenetrating network structure of the present invention. In this structure, a particulate filler (C) is enclosed in a thermoplastic polystyrene resin (B) and the polyacetal resin (A) and the thermoplastic polystyrene resin (B) are combined to form a network and entangled structure, so that a substantially continuous phase is formed despite the fact that the content of the thermoplastic polystyrene resin (B) is low.

Namely, in the present invention, at least part of (and in general most of) an effective amount of the thermoplastic polystyrene resin B and the polyacetal resin A are mutually dispersed into each other in a continuous manner. The present invention is characterized by this form of dispersion and remedies the fatal drawback of the conventional polystyrene resin blends, that is, the drawback arising from poor dispersibility.

The above-described dispersion structure can be confirmed by crushing or cutting it to a suitable size and removing the component A as the matrix by decomposing with an acid solution. When the component B forms a network dispersion, its form remains unchanged even after decomposing and removing the matrix A. On the other hand, when the component B is dispersed in the particulate or delaminated form, the form is broken beyond recognition. Further, it is also possible to determine the network portion substantially quantitatively by conducting separation with a suitable sieve after the decomposition of the matrix.

The polyacetal resin used as the component A in the present invention is a polymer compound comprising an oxymethylene group ($-CH_2O-$) as a major constituent unit and may be any of a polyoxymethylene homopolymer and a copolymer, terpolymer and a block copolymer containing a minor amount of other constituent units besides the oxymethylene units. The molecule may have not only a linear structure but also a branched or crosslinked structure. The degree of polymerization is not particularly limited and may be such that the polymer is moldable (for example, the melt flow rate [MFR] at 190°C under a load of 2160 g is 1.5 to 70).

The polystyrene resin used as the component B in the present invention may be a known one mainly composed of styrene and prepared by radical polymerization or ionic polymerization. Any polystyrene resin prepared by polymerization, solution polymerization, suspension polymerization, emulsion polymerization on a commercial scale may be used. Further, the polystyrene resin (B) of the present invention may be not only polystyrene but also a copolymer of styrene as a major component with another reactive monomer, such as a vinyl compound or a diene compound. Polystyrene, poly-$\alpha$-methylstyrene or a copolymer of polystyrene or poly-$\alpha$-methylstyrene as a major component with a methacrylic ester, acrylonitrile, butadiene, chlorinated ethylene is particularly preferred.

It is preferred that the components A and B have a viscosity satisfying the relationship represented by the following formula (3):

$$MFR(B)/MFR(A) = 1/3 \text{ to } 50 \tag{3}$$

wherein MFR(A) is the melt flow rate of the polyacetal resin at 190°C under a load of 2160 g according to ASTM D-1238 and MFR(B) is the melt flow rate of the polystyrene resin at 200°C under a load of 5000 g according to ASTM D-1238.

The value of the formula (3) is particularly preferably 1/2 to 25. Regarding the above-described relationship of MFR, in the present invention, the ratio of the viscosity of the polystyrene B to that of the polyacetal resin A is lower than that disclosed in Japanese Patent Laid-Open No. 38463/1989 (that is, the MFR(B)/MFR(A) value is larger). This is preferred for attaining the network dispersion of the present invention, and serves to avoid the difficulty of molding derived from the viscosity behavior.

The blending ratio of the components A and B in the present invention is such that the component B is 5 to 50%, preferably 10 to 40%, based on the total weight of the components A and B. If the amount of the component B is excessively small, the object of the present invention cannot be attained, that is, the component B does not serve to improve the molding shrinkage. On the other hand, if the amount of the component B is excessively large, the properties inherent in the polyacetal resin are lost, so that it becomes difficult to develop the network dispersion structure.

The component C should have a surface tension at the melt kneading temperature of larger than that of at least the component B at the same temperature, and it is preferred that the difference in the surface tension between the component C and the component B be 2 mN/m (2 dyn/cm) or more.

It is necessary to determine the surface tension at the melt kneading temperature. For the purposes of this specification, the surface tension is evaluated by using at that temperature the commonly adopted "hanging drop" method. This method comprises standing a tube vertically and determining the surface tension of a liquid from the behavior of a droplet in such a state that the sample put inside the tube forms a droplet which hangs on the tube wall. If the resin does not melt, the critical surface tension is determined with the use of a contact angle calculated by the Zisman Plot method. (Details of the measurement of the surface tension are given in the Examples presented below).

The surface tension value [mN/m (dyn/cm)] at 190°C was about 21 for the polyacetal resin (A) and 25 to 35 for the polystyrene resin (for example, about 28 for polystyrene itself and 31 to 32 for a polystyreneacrylonitrile copolymer). Therefore, when the kneading is conducted at 190°C, it will suffice when the surface tension of the component C is larger than that of the component B.

The filler as the component C is in the particulate form having a mean particle diameter of 0.05 to 50 μm, preferably 0.1 to 10 μm. The smaller the particle diameter, the better the results of formation of a fine network structure. It is suitable to incorporate the component C in an amount of 10 to 70% by weight, preferably 20 to 60% by weight based on the total amount of the components B and C. If the amount of the component C is excessively small, it is difficult to attain the effect of the present invention, while if it is excessively large, the properties are adversely affected.

The network dispersion appears according to the present invention apparently because the presence of the component C satisfying the above-described requirements during the melt kneading causes the particulate component C to be selectively enclosed in the component B under the influence of the relative surface tension, and the component B enclosing a large amount of the component C therein extends in the branched form accompanying the migration and dispersion of the component C caused by the kneading. The formed branches are joined to each other to form a network structure.

The filler component C may be any inorganic and organic filler as far as the above-described requirements are satisfied. For example, the component C is selected from the following fillers. If necessary, these fillers may be used after the regulation of the surface tension with a surface treatment.

Examples of suitable inorganic fillers (C) include silica, quartz power, glass beads, milled glass fiber, glass balloons, glass powder, silicates such as calcium silicate, aluminium silicate, kaolin, talc, clay, diatomaceous earth and wollastonite, metal oxides such as iron oxide, titanium oxide, zinc oxide, antimony trioxide and alumina, metal carbonates such as calcium carbonate and magnesium carbonate, metal sulphates such as calcium sulphate and barium sulphate, and other fillers such as ferrite, silicon carbide, silicon nitride and boron nitride:

Examples of suitable organic fillers (C) include particulate fillers comprising heat-resistant thermoplastic resins, thermosetting resins or other resins. Such resins include phenolic resins, high-melting acrylic resins, polyamide resins, metanine resins and epoxy resins. They may be used alone or in a combination of two or more of them.

The polyacetal resin composition of the present invention may further contain additional additives generally known in the art, for example, lubricants, slip agents, nucleating agents, dyes and pigments, parting agents, antioxidants, heat stabilizers, weather (light) stabilizers, hydrolysis stabilizers, inorganic or organic fibrous reinforcements, flaky or particulate fillers other than the component C and thermoplastic resins other than the components A and B, for the purpose of imparting desired properties to the composition of the present invention in such an amount as will not spoil the purpose of the present invention.

The composition structure of the present invention can be prepared by various known methods. It is at least necessary to conduct heat melting in the presence of three components, that is, the components A, B and C, and to conduct kneading for 30 sec or longer. The other components may be either simultaneously or separately added. Specifically, for example, after the components A, B and C have been homogeneously mixed with each other by means of a mixer, such as a tumbler or a Henschel mixer, the mixture may be fed in a single-screw or double-screw extruder to conduct melt kneading and then subjected either to pelletizing followed by molding or to direct molding.

It is preferred to conduct the melt kneading at the melting temperature under a shear rate of 40 $sec^{-1}$ or more. The shear rate is particularly preferably 100 to 500 $sec^{-1}$.

The treatment temperature is 5 to 100°C above the melting temperature of the resin component, particularly preferably 10 to 60°C above the melting temperature. If this temperature it excessively high, undesirable decomposition and abnormal reactions occur.

The melt kneading time ranges from at least 30 sec to 15 min, preferably from 1 to 10 min.

The polyacetal resin composition structure of the present invention comprises a polyacetal resin and a polystyrene resin dispersed therein to give a network structure, can be formed by a simple method, can remedy the drawback of the polyacetal resin, i.e., the molding shrinkage, can maintain properties close to those of the polyacetal resin, can remedy the unfavorable phenomena observed in the conventional resin composition structure, such as the lowering in the properties arising from poor dispersibility and the deterioration of the appearance of the molded article, and exhibits smooth and good surface properties, which renders the polyacetal resin composition structure of the present invention promising for use in various applications.

Examples

The present invention is described in more detail with reference to the following non-limiting Examples.

Example 1

A polyacetal resin (A) (Duracon manufactured by Polyplastics Co., Ltd.) and a polystyrene resin (B) each having a surface tension and an MFR value specified in Table 1, and an acrylic rubber particle (C) (AR; mean particle diameter: 0.3 $\mu$m) were mixed with each other in proportions specified therein, and the mixture was kneaded at a predetermined temperature of 190°C in a double-screw extruder having a diameter of 30 mm at a screw revolution rate of 80 rpm (shear rate: 100 $sec^{-1}$) and pelletized. The pellets were molded into a test piece on an injection molding machine. The test piece was subjected to the evaluation of its dispersibility and other properties. The results are given in the Table 1.

The characteristic values of the test piece properties were measured by the following methods.

Measuring method for surface tension

An automatic interfacial tensiometer (model PD-Z, manufactured by Kyowa Interface Science Co., Ltd.), was used for the measurement of the surface tension of the polyacetal resin and the polystyrene resin, conducted in an atmosphere of 190°C by the hanging drop method [a method described in "Kaimen to Koroido (Interface and Colloid)," Shin Jikken Kagaku Koza, vol. 18, 1977, pp. 78-79, published by Maruzen Co., Ltd.]. The surface tensions of the polyacetal resin and the polystyrene resin were 21 mN/m and 28 mN/m, respectively.

The acrylic rubber particles were molded at 200°C into a film on a pressing machine, and the critical surface tension at each temperature was measured with Kyowa Interface Science CA-Z by the contact angle method [a method described in "Kaimen to Koroido (Interface,and Colloid)," Shin Jikken Kagaku Koza, vol. 18, 1977, pp. 93-106, published by Maruzen Co., Ltd.] to determine the temperature coefficient. The results of measurement were as follows. The measured value was converted into the surface tension of the acrylic rubber particle at 190°C and found to be 30 mN/m.

Surface tension at 25°C: 42 mN/m
Surface tension at 60°C: 39.5 mN/m
Surface tension at 80°C: 38 mN/m
Temperature gradient (-dr/dT): 0.072 mN/m

Method of conforming network structure

A molded piece cut into a size of 10 x 10 x 3 mm was placed in an ethanolic hydrochloric acid solution [32 N hydrochloric acid : ethanol = 1 : 3 (by vol)] and refluxed at 80°C for 12 hr so that the polyacetal resin (A) as a matrix resin was decomposed with the acid and removed by dissolution. Then, the form of dispersion of the polystyrene resin (B) was observed.

If the dispersion is such that the polystyrene resin (B) is dispersed in the particulate or delaminated form as in the case of the prior art, the shape of the molded piece is broken beyond recognition and only a deposit of the polystyrene resin (B) is observed.

On the other hand, when the polystyrene resin (B) has an interpenetrating network structure according to the present invention, the shape of the molded piece remains unchanged even after the decomposition and removal of the polyacetal resin A as the matrix resin and can be confirmed with the naked eye or under an optical microscope. Further, the interpenetrating network structure can be magnified and observed under a scanning electron microscope. Figure 3 is an electron photomicrograph showing the particulate structure (the network structure) after the acid decomposition of the composition structure formed in the Example 1.

In order to conduct quantitative evaluation, the molded piece subjected to the acid treatment by the above-described method was filtered through a 12-mesh (1.68 mm) sieve to determine the weight of the residue. The separated and dispersed portion has passed through the sieve and does not stay on the sieve, while the network structure portion stays on the sieve. Therefore, the weight of the residue refers to the total weight of (B and C) of the network structure portion.

Tensile strength and elongation:

- measured according to ASTM D-638

Surface appearance:

Surface roughness, gloss and flow marks were evaluated with the naked eye.

Shrinkage:

The dimension in the given direction of a molded ASTM tensile test piece was accurately measured to determine the difference in the dimension between the test piece and the mold, and the shrinkage was expressed as a percentage.

Example 2

A molded piece was prepared in the same manner as that of the Example 1, except that the mean particle diameter of the acrylic rubber particle was changed as specified in the Table 1. The results of evaluation are also given therein.

Acrylic rubber particles were heated at 240°C and agglomerated, pulverized and classified by means of a sieve to regulate the particle diameter of the acrylic rubber particle.

Comparative Examples 1 to 4

Each of a polyacetal resin alone, a polystyrene resin alone, a binary system free from the component C and combinations outside the scope of the present invention was pelletized in the same manner as that of the Examples 1 to 2, and the pellets were molded and evaluated. The results are also given in the Table 1.

Table 1

| | Surface tension | Unit | Ex. 1 | Ex. 2 | Comp. Ex. 1 | Comp. Ex. 2 | Comp. Ex. 3 | Comp. Ex. 4 |
|---|---|---|---|---|---|---|---|---|
| (A) polyacetal (MFR = 9)[1] | 21 | pt. wt. | 85 | 85 | 100 | — | 85 | 85 |
| (B) polystyrene (MFR = 12)[1] | 28 | do. | 15 | 15 | — | 100 | 15 | 15 |
| (C) AR (mean particle diameter: 0.3 μm) | 30 | do. | 5 | — | — | — | — | — |
| (C) AR (mean particle diameter: 30 μ mm) | 30 | do. | — | 5 | — | — | — | — |
| (C) AR (mean particle diameter: 60 μ m) | 30 | do. | — | — | — | — | — | 5 |
| form after acid treatment | — | — | retained | partially retained | totally decomposed | no change | broken | broken |
| total weight after acid treatment[2] | | pt. wt. | 18 (90) | 14 (70) | 0 | 100 | 0 | 0 |
| molding shrinkage | | % | 1.5 | 1.6 | 2.2 | 0.5 | 1.8 | 1.8 |
| tensile strength | | kg/cm$^2$ | 537 | 522 | 624 | 374 | 546 | 501 |
| tensile elongation | | % | 46 | 41 | 64 | 2.1 | 19 | 28 |
| appearance | | — | good | good | good | good | poor | poor |

Note) [1]: MFR of (A) was measured at 190°C under a load of 2160 g.

   MFR of (B) was measured at 200°C under a load of 5000 g.

   [2]: Values in the parentheses are % based on the sum of (B) and (C).

EP 0 494 533 B1

Examples 3 to 6 and Comparative Examples 5 to 8

Molded articles were prepared and evaluated in the same manner as that of the Example 1, except that the formulation of the components A, B and C were as specified in Table 2. The results of evaluation are also given therein.

Examples 7 to 9 and Comparative Examples 9 to 11

Compositions were prepared, molded and evaluated in the same manner as that of the Example 1, except that a polyamide particle (PA) (mean particle diameter: 5 μm), calcium carbonate (mean particle diameter: 1 μm), two types of talc (one having a mean particle diameter of 10 μm and a mean thickness of 2 μm and the other having a mean particle diameter of 60 μm and a mean thickness of 5 μm), a silicone polymer (PDM; mean particle diameter: 1 μm) and tetrafluoroethylene (PTFE; mean particle diameter: 0.3 μm) were used as the filler C. The results are also given in Table 3.

Table 2

| | Surface tension | Unit | Ex. 3 | Ex. 4 | Ex. 5 | Ex. 6 | Comp. Ex. 5 | Comp. Ex. 6 | Comp. Ex. 7 | Comp. Ex. 8 |
|---|---|---|---|---|---|---|---|---|---|---|
| (A) polyacetal (MFR = 9)[1] | 21 | pt. wt. | 95 | 95 | 70 | 75 | 95 | 100 | 70 | 70 |
| (B) polystyrene (MFR = 12)[1] | 28 | do. | 5 | 5 | 30 | 25 | 5 | — | 30 | 30 |
| (C) AR (mean particle diameter: 0.3 μm) | 30 | do. | 2 | 5 | 10 | 15 | — | 5 | — | 1 |
| form after acid treatment | — | — | retained | retained | retained | retained | broken | broken | broken | broken |
| total weight after acid treatment[2] | | pt. wt. | 5 (71) | 5 (50) | 36 (90) | 37 (93) | 0 | 0 | 0 | 0 |
| molding shrinkage | | % | 1.9 | 1.8 | 1.0 | 1.1 | 2.2 | 2.1 | 1.3 | 1.3 |
| tensile strength | | kg/cm² | 586 | 579 | 410 | 429 | 577 | 591 | 418 | 420 |
| tensile elongation | | % | 60 | 65 | 13.3 | 10.2 | 62 | 65 | 3.1 | 3.1 |
| appearance | | — | good | good | good | good | poor | good | poor | poor |

Note) •1: MFR of (A) was measured at 190°C under a load of 2160 g.

MFR of (B) was measured at 200°C under a load of 5000 g.

•2: Values in the parentheses are % based on the sum of (B) and (C).

EP 0 494 533 B1

Table 3

| | Surface tension | Unit | Ex. 7 | Ex. 8 | Ex. 9 | Comp. Ex. 9 | Comp. Ex. 10 | Comp. Ex. 11 |
|---|---|---|---|---|---|---|---|---|
| (A) polyacetal (MFR = 9)[*1] | 21 | pt. wt. | 85 | 85 | 85 | 85 | 85 | 85 |
| (B) polystyrene (MFR = 12)[*1] | 28 | do. | 15 | 15 | 15 | 15 | 15 | 15 |
| (C) PA (mean particle diameter: 5 $\mu$m) | 36 | do. | 5 | – | – | – | – | – |
| (C) CaCo$_3$ (mean particle diameter: 1 $\mu$m) | 65 | do. | – | 5 | – | – | – | – |
| (C) talc (mean particle diameter: 10 $\mu$m) | 63 | do. | – | – | 5 | – | – | – |
| (C) talc (mean particle diameter: 60 $\mu$m) | 63 | do. | – | – | – | 5 | – | – |
| (C) PDM (mean particle diameter: 1 $\mu$m) | 10 | do. | – | – | – | – | 5 | – |
| (C) PTFE (mean particle diameter: 0.3 $\mu$m) | 9 | do. | – | – | – | – | – | 5 |
| form after acid treatment | – | | retained | retained | retained | broken | broken | broken |
| total weight after acid treatment[*2] | | pt. wt. | 19 (95) | 14 (70) | 13 (65) | 0 | 0 | 0 |
| molding shrinkage | | % | 1.5 | 1.6 | 1.8 | 2.0 | 2.0 | 2.0 |
| tensile strength | | kg/cm$^2$ | 530 | 537 | 541 | 545 | 521 | 522 |
| tensile elongation | | % | 41 | 27 | 28 | 10 | 26 | 16 |
| appearance | | – | good | good | good | slightly poor | poor | poor |

Note) *1: MFR of (A) was measured at 190°C under a load of 2160 g.

MFR of (B) was measured at 200°C under a load of 5000 g.

*2: Values in the parentheses are % based on the sum of (B) and (C).

EP 0 494 533 B1

Example 10 and Comparative Example 12

A test was conducted in the same manner as that of the Example 7 and Comparative Example 3, except that a polystyrene-acrylonitrile copolymer (AS) (32 dyn/cm, (MFR = 15)) was used instead of polystyrene. The results are given in Table 4.

## Table 4

|  | Surface tension | Unit | Ex. 10 | Comp. Ex. 12 |
|---|---|---|---|---|
| (A) polyacetal (MFR = 9)[*1] | 21 | pt. wt. | 85 | 85 |
| (B) AS (MFR = 15)[*1] | 32 | do. | 15 | 15 |
| (C) PA (mean particle diameter: 5 μm) | 36 | do. | 5 | - |
| form after acid treatment |  | - | retained | broken |
| total weight after acid treatment[*2] |  | pt. wt | 17 (85) | 0 |
| molding shrinkage |  | % | 1.5 | 1.7 |
| tensile strength |  | kg/cm$^2$ | 651 | 640 |
| tensile elongation |  | % | 43 | 24 |
| appearance |  | - | good | poor |

Note) *1: MFR of (A) was measured at 190°C under a load of 2160 g.
MFR of (B) was measured at 200°C under a load of 5000 g
*2: Values in the parentheses are % based on the sum of (B) and (C).

Examples 11 and 12

A test was conducted in the same manner as that of the Example 1, except that use was made of polystyrenes respectively having MFR values of 4 and 2. The results are given in Table 5.

Table 5

|  | Surface tension | Unit | Ex. 11 | Ex. 12 |
|---|---|---|---|---|
| (A) polyacetal (MFR = 9)[*1] | 21 | pt. wt. | 85 | 85 |
| (B) polystryrene (MFR = 4)[*1] | 28 | do. | 15 | - |
| polystyrene (MFR = 2)[*1] | 28 | do. | - | 15 |
| (C) AR (mean particle diameter: 0.3 μm) | 30 | do. | 5 | 5 |
| form after acid treatment | | - | retained | incomplete |
| total weight after acid treatment[*2] | | pt.wt | 18 (90) | 7 (35) |
| moldability | | - | acceptable | large torque temp. rise required |

Note) *1:  MFR of (A) was measured at 190°C under a load of 2160 g.

MFR of (B) was measured at 200°C under a load of 5000 g

*2:  Values in the parentheses are % based on

the sum of (B) and (C).

## Claims

1.  A process for forming a polyacetal resin composition structure wherein a polyacetal resin (A) and a polystyrene resin (B) form an interpenetrating network dispersion, characterised in that a particulate filler (C) having a larger surface tension (measured by the hanging drop method) at the melt-kneading temperature than that of at least component B and having a mean-particle diameter of 0.05 to 50 μm is incorporated in an amount satisfying the relationship represented by the following formulae (1) and (2) when melt-kneading the component B with the component A as a matrix:

$$B/(A + B) = 0.05 \text{ to } 0.5 \text{ (by weight)} \tag{1}$$
$$C/(B + C) = 0.1 \text{ to } 0.7 \text{ (by weight)} \tag{2}.$$

2.  A process for forming a polyacetal resin composition structure according to claim 1, wherein the thermoplastic polystyrene resin (B) is polystyrene or a copolymer resin comprising polystyrene as the major component and acrylonitrile and/or acrylic acid or its ester as a comonomer component.

3.  A process for forming a polyacetal resin composition structure according to any preceding claim, wherein the components A and B are such that the component B has a melt flow rate (MFR(B)) satisfying the relationship represented by the following formula (3):

$$MFR(B)/MFR(A) = 1/3 \text{ to } 50 \tag{3}$$

wherein MFR(A) is the melt flow rate of the polyacetal resin at 190°C under a load of 2160 g according to ASTM D-1238 and MFR(B) is the melt flow rate of the polystyrene resin at 200°C under a load of 5000 g according to ASTM D-1238.

4. A process for forming a polyacetal resin composition structure according to claim 1, wherein the surface tension of the component C at the melt-kneading temperature is at least 2 mN/m (dyn/cm) greater than that of the component B.

5. A process for forming a polyacetal resin composition structure according to any preceding claim, wherein the blending ratio of the components A and B is such that the amount of component B is 5 to 50% by weight, based on the total weight of the components A and B.

6. A polyacetal resin composition structure wherein a polyacetal resin (A) and a polystyrene resin (B) form an interpenetrating network dispersion, characterised in that the structure further includes a particulate filler (C) having a larger surface tension (measured by the hanging drop method) at the melt-kneading temperature than that of at least component B and having a mean particle diameter of 0.05 to 50 μm in an amount satisfying the relationship represented by the following formulae (1) and (2):

$$B/(A + B) = 0.05 \text{ to } 0.5 \text{ (by weight)} \tag{1}$$
$$C/(B + C) = 0.1 \text{ to } 0.7 \text{ (by weight)} \tag{2}.$$

7. A polyacetal resin composition structure according to claim 6, wherein the thermoplastic polystyrene resin (B) is a copolymer of polystyrene or poly-$\alpha$-methylstyrene as a major component with a methacrylic ester, acrylonitrile, butadiene or chlorinated ethylene.

8. A polyacetal resin composition structure according to claim 6 or claim 7, wherein the mean particle diameter of the component C is 0.1 to 10 μm.

9. A polyacetal resin composition structure according to any of claims 6 to 8, wherein the amount of the component C is 20 to 60% by weight based on the total amount of the components B and C.

10. A molded article comprising a polyacetal resin composition structure according to any of the composition claims 6 to 9 or formed by the process according to any of claims 1 to 5.

**Patentansprüche**

1. Verfahren zur Bildung einer Struktur aus einer Polyacetal-Harzzusammensetzung, wobei ein Polyacetal-Harz (A) und ein Polystyrol-Harz (B) eine interpenetrierende Netzwerks-Dispersion bilden, dadurch gekennzeichnet, daß ein bestimmter Füllstoff (C), der bei der Schmelzknet-Temperatur eine größere Oberflächenspannung (gemessen durch das Verfahren des hängenden Tropfens) als wenigstens Verbindung B aufweist und der einen mittleren Teilchen-Durchmesser von 0,05 bis 50 μm aufweist, in einer Menge enthalten ist, die ausreichend ist, um die durch die folgenden Formeln (1) und (2) dargestellte Beziehung zu erfüllen, wenn die Komponente B mit der Komponente A als eine Matrix schmelzgeknetet wird:

$$B/(A + B) = 0,05 \text{ bis } 0,5 \text{ (auf das Gewicht bezogen)} \tag{1}$$
$$C/(B + C) = 0,1 \text{ bis } 0,7 \text{ (auf das Gewicht bezogen)} \tag{2}$$

2. Verfahren zur Bildung einer Struktur aus einer Polyacetal-Harzzusammensetzung nach Anspruch 1, wobei das thermoplastische Polystyrol-Harz (B) Polystyrol oder ein Copolymer-Harz ist, das Polystyrol als die Hauptkomponente und Acrylnitril und/oder Acrylsäure oder deren Ester als eine Comonomer-Komponente umfaßt.

3. Verfahren zur Bildung einer Struktur aus einer Polyacetal-Harzzusammensetzung nach irgendeinem vorhergehenden Anspruch, wobei die Komponenten A und B so sind, daß die Komponente B eine Schmelzfluß-Geschwindigkeit (MFR(B)) aufweist, die die durch die folgende Formel (3) dargestellte Beziehung erfüllt:

$$MFR(B)/MFR(A) = 1/3 \text{ bis } 50 \tag{3,}$$

wobei MFR(A) die Schmelzfluß-Geschwindigkeit des Polyacetal-Harzes bei 190 °C unter einer Belastung von 2160 g in Einklang mit ASTM D-1238 ist und MFR(B) die Schmelzfluß-Geschwindigkeit des Polystyrol-Harzes bei 200 °C unter einer Belastung von 5000 g in Einklang mit ASTM D-1238 ist.

4. Verfahren zur Bildung einer Struktur aus einer Polyacetal-Harzzusammensetzung nach Anspruch 1, wobei die Oberflächenspannung von Komponente C bei der Schmelzknet-Temperatur um wenigstens 2 mN/m (dyn/cm) größer als die von Komponente B ist.

5. Verfahren zur Bildung einer Struktur aus einer Polyacetal-Harzzusammensetzung nach irgendeinem der vorhergehenden Ansprüche, wobei das Mischungsverhältnis der Komponenten A und B so ist, daß die Menge von Komponente B 5 bis 50 Gew.-% beträgt, bezogen auf das Gesamtgewicht der Komponenten A und B.

6. Struktur aus einer Polyacetal-Harzzusammensetzung, wobei ein Polyacetal-Harz (A) und ein Polystyrol-Harz (B) eine interpenetrierende Netzwerk-Dispersion bilden, gekennzeichnet dadurch, daß in der Struktur weiterhin ein aus Teilchen bestehender Füllstoff (C), der bei der Schmelzknet-Temperatur eine größere Oberflächenspannung (gemessen durch das Verfahren des hängenden Tropfens) als wenigstens Verbindung B aufweist und der einen mittleren Teilchen-Durchmesser von 0,05 bis 50 μm aufweist, in einer Menge enthalten ist, die ausreichend ist, um die durch die folgenden Formeln (1) und (2) dargestellte Beziehung zu erfüllen:

$$B/(A + B) = 0,05 \text{ bis } 0,5 \text{ (auf das Gewicht bezogen)} \tag{1}$$
$$C/(B + C) = 0,1 \text{ bis } 0,7 \text{ (auf das Gewicht bezogen)} \tag{2}.$$

7. Struktur aus einer Polyacetal-Harzzusammensetzung nach Anspruch 6, wobei das thermoplastische Polystyrol-Harz (B) ein Copolymer von Polystyrol oder Poly-α-methylstyrol als Hauptkomponente mit einem Methacrylester, Acrylnitril, Butadien oder chloriertem Ethylen ist.

8. Struktur aus einer Polyacetal-Harzzusammensetzung nach Anspruch 6 oder Anspruch 7, wobei der durchschnittliche Teilchen-Durchmesser von Komponente C 0,1 bis 10 μm beträgt.

9. Struktur aus einer Polyacetal-Harzzusammensetzung nach irgendeinem der Ansprüche 6 bis 8, wobei die Menge von Komponente C 20 bis 60 Gew.-%, bezogen auf die Gesamtmenge der Komponenten B und C, beträgt.

10. Formgepreßter Gegenstand, umfassend eine Struktur aus einer Polyacetal-Harzzusammensetzung nach irgendeinem der Zusammensetzungs-Ansprüche 6 bis 9, gebildet durch das Verfahren nach irgendeinem der Ansprüche 1 bis 5.


**Revendications**

1. Un procédé pour former une composition structurée à base de résine polyacétal dans laquelle une résine polyacétal (A) et une résine polystyrénique (B) forment une dispersion en réseaux interpénétrants, caractérisé en ce qu'une charge particulaire (C) ayant une tension superficielle (mesurée par la méthode de la goutte suspendue) à la température de malaxage à l'état fondu qui est plus grande que celle d'au moins le composant B et ayant un diamètre moyen de particules de 0,05 à 50 μm est incorporée en une quantité vérifiant la relation exprimée par les formules (1) et (2) suivantes lors du malaxage à l'état fondu du composant B avec le composant A servant de matrice :

$$B/(A + B) = 0,05 \text{ à } 0,5 \text{ (en poids)} \tag{1}$$
$$C/(B + C) = 0,1 \text{ à } 0,7 \text{ (en poids)} \tag{2}.$$

2. Un procédé pour former une composition structurée à base de résine polyacétal selon la revendication 1, dans lequel la résine polystyrénique thermoplastique (B) est du polystyrène ou une résine copolymère comprenant du polystyrène comme constituant principal et de l'acrylonitrile et/ou de l'acide acrylique ou un ester de celui-ci comme constituant comonomère.

3. Un procédé pour former une composition structurée à base de résine polyacétal selon l'une quelconque des revendications précédentes, dans lequel les composants A et B sont tels que le composant B possède un indice de fusion [IF(B)] vérifiant la relation exprimée par la formule (3) suivante :

$$IF(B)/IF(A) = 1/3 \text{ à } 50 \tag{3}$$

où IF(A) est l'indice de fusion de la résine polyacétal à 190°C sous une charge de 2160 g selon la norme ASTM D-1238 et IF(B) est l'indice de fusion de la résine polystyrénique à 200°C sous une charge de 5000 g selon la norme ASTM D-1238.

4. Un procédé pour former une composition structurée à base de résine polyacétal selon la revendication 1, dans lequel la tension superficielle du composant C à la température de malaxage à l'état fondu est supérieure d'au moins 2 mN/m à celle du composant B.

5. Un procédé pour former une composition structurée à base de résine polyacétal selon l'une quelconque des revendications précédentes, dans lequel le rapport de mélange des composants A et B est tel que la quantité de composant B est de 5 à 50 % en poids par rapport au poids total des composants A et B.

6. Une composition structurée à base de résine polyacétal dans laquelle une résine polyacétal (A) et une résine polystyrénique (B) forment une dispersion en réseaux interpénétrants, caractérisée en ce que la structure comprend de plus une charge particulaire (C) ayant une tension superficielle (mesurée par la méthode de la goutte suspendue) à la température de malaxage à l'état fondu qui est plus grande que celle d'au moins le composant B et ayant un diamètre moyen de particules de 0,05 à 50 $\mu$m en une quantité vérifiant la relation exprimée par les formules (1) et (2 suivantes :

$$B/(A + B) = 0,05 \text{ à } 0,5 \text{ (en poids)} \qquad (1)$$
$$C/(B + C) = 0,1 \text{ à } 0,7 \text{ (en poids)} \qquad (2).$$

7. Une composition structurée à base de résine polyacétal selon la revendication 6, dans laquelle la résine polystyrénique thermoplastique (B) est un copolymère de polystyrène ou de poly-$\alpha$-méthylstyrène comme constituant principal avec un ester méthacrylique, l'acrylonitrile, le butadiène ou l'éthylène chloré.

8. Une composition structurée à base de résine polyacétal selon la revendication 6 ou la revendication 7, dans laquelle le diamètre moyen de particules du composant C est de 0,1 à 10 $\mu$m.

9. Une composition structurée à base de résine polyacétal selon l'une quelconque des revendications 6 à 8, dans laquelle la quantité du composant C est de 20 à 60 % en poids par rapport à la quantité totale des composants B et C.

10. Un article moulé comprenant une composition structurée à base de résine polyacétal selon l'une quelconque des revendications de composition 6 à 9 ou formé par le procédé selon l'une quelconque des revendications 1 à 5.

Fig. 1

Fig. 2

Fig. 3